# EUROPEAN PATENT APPLICATION

(11) **EP 4 700 553 A1**
(43) Date of publication of application: **25.02.2026**
(21) Application number: 24748811.7
(22) Date of filing: 27.03.2024
(51) Int. Cl.: G06F 3/0483

(54) **INFORMATION DISPLAY METHOD AND APPARATUS, COMPUTER DEVICE, AND STORAGE MEDIUM**

(30) Priority: 21.04.2023 CN 202310443579
(71) Applicant: Beijing Zitiao Network Technology Co., Ltd., Beijing 100190 (CN)
(72) Inventor: LIU, Siyu, Beijing 100028 (CN)
(74) Representative: Marks & Clerk LLP
(86) International application number: PCT/CN2024/083959
(87) International publication number: WO 2024/217234

(57) **Abstract**

The present disclosure provides an information display method and apparatus, a computer device, and a storage medium. The method includes: displaying a target video and artificial intelligence question-answering prompt information; displaying an artificial intelligence dialogue interface in response to a trigger operation for the artificial intelligence question-answering prompt information; and displaying, on the artificial intelligence dialogue interface, generated first question information associated with the target video and a generated first artificial intelligence answer result corresponding to the first question information. According to embodiments of the present disclosure, by using artificial intelligence technology, for a currently opened target video, some questions that are associated with the target video and in which a user may be interested may be actively provided, and related artificial intelligence answer results are provided. Thus, the user does not need to think how to describe a related question, or to enter the question into a search engine to find search results. The user can then quickly obtain more information related to the target video, and the efficiency of information obtaining is improved.

## Description

The present application claims priority to Chinese Patent Application No. 202310443579.8, filed on April 21, 2023, which is incorporated herein by reference in its entirety as a part of the present application.

### TECHNICAL FIELD

The present disclosure relates to an information display method and apparatus, a computer device, and a storage medium.

### BACKGROUND

With the development of Internet technologies, videos have gradually become an important means for users to obtain information.

If a user wants to learn more information about a current video while browsing the video, the user usually performs a search using a search engine. During the search, the user needs to first think how to describe a related question, and enter in the search engine a question related to the current video, and then trigger a search for the entered question to find more information about the current video.

The above method for obtaining information results in cumbersome operations and low information obtaining efficiency.

### SUMMARY

Embodiments of the present disclosure provide at least an information display method and apparatus, a computer device, and a storage medium.

According to a first aspect, an embodiment of the present disclosure provides an information display method. The method includes:
displaying a target video and artificial intelligence question-answering prompt information;
displaying an artificial intelligence dialogue interface in response to a trigger operation for the artificial intelligence question-answering prompt information; and
displaying, on the artificial intelligence dialogue interface, generated first question information associated with the target video and a generated first artificial intelligence answer result corresponding to the first question information.

With reference to the first aspect, an embodiment of the present disclosure provides a first possible implementation of the first aspect, where the first question information is generated according to the following steps:
performing object recognition on description information and/or a video picture of the target video, so as to determine a target object associated with the target video, where the target object includes an entity object and/or an event object; and
generating the first question information based on introduction information and/or search data associated with the target object.

With reference to the first possible implementation of the first aspect, an embodiment of the present disclosure provides a second possible implementation of the first aspect, where after the generating the first question information based on introduction information and/or search data associated with the target object, the method further includes:
in response to a total number of pieces of generated first question information exceeding a set threshold, based on behavior data obtained with user authorization, determining, from a plurality of pieces of generated first question information, first question information to be displayed on the artificial intelligence dialogue interface.

With reference to the first aspect, an embodiment of the present disclosure provides a third possible implementation of the first aspect, where the displaying, on the artificial intelligence dialogue interface, generated first question information associated with the target video and a generated first artificial intelligence answer result corresponding to the first question information includes:
displaying, on the artificial intelligence dialogue interface, a plurality of pieces of generated first question information associated with the target video; and
in response to a trigger operation for any of the plurality of pieces of first question information, displaying, on the artificial intelligence dialogue interface, a first artificial intelligence answer result corresponding to the any piece of first question information.

With reference to the first aspect or the first possible implementation of the first aspect, an embodiment of the present disclosure provides a fourth possible implementation of the first aspect, where the artificial intelligence question-answering prompt information includes at least one piece of first question information; and
the displaying an artificial intelligence dialogue interface in response to a trigger operation for the artificial intelligence question-answering prompt information includes:
in response to a trigger operation for any of the at least one piece of first question information, displaying, on the artificial intelligence dialogue interface, the any piece of first question information and a first artificial intelligence answer result corresponding to the any piece of first question information.

With reference to the first aspect or the first possible implementation of the first aspect, an embodiment of the present disclosure provides a fifth possible implementation of the first aspect, where the artificial intelligence question-answering prompt information includes target first question information and a partial first artificial intelligence answer result corresponding to the target first question information; and
the displaying an artificial intelligence dialogue interface in response to a trigger operation for the artificial intelligence question-answering prompt information includes:
in response to a trigger operation for the target first question information or the partial first artificial intelligence answer result, displaying a complete first artificial intelligence answer result corresponding to the target first question information.

With reference to the first aspect, an embodiment of the present disclosure provides a sixth possible implementation of the first aspect, where after the displaying generated first question information associated with the target video and a generated first artificial intelligence answer result corresponding to the first question information, the method further includes:
displaying at least one piece of generated second question information corresponding to the first artificial intelligence answer result; and
in response to a trigger operation for any of the at least one piece of second question information, displaying a second artificial intelligence answer result corresponding to the second question information.

According to a second aspect, an embodiment of the present disclosure further provides an information display apparatus. The apparatus includes:
a first display module configured to display a target video and artificial intelligence question-answering prompt information;
a second display module configured to display an artificial intelligence dialogue interface in response to a trigger operation for the artificial intelligence question-answering prompt information; and
a third display module configured to display, on the artificial intelligence dialogue interface, generated first question information associated with the target video and a generated first artificial intelligence answer result corresponding to the first question information.

According to a third aspect, an embodiment of the present disclosure further provides a computer device. The computer device includes: a processor, a memory, and a bus, where the memory stores machine-readable instructions executable by the processor, the processor communicates with the memory through the bus when the computer device is running, and the machine-readable instructions, when executed by the processor, cause the steps of the first aspect described above, or the steps of any one of the possible implementations in the first aspect to be performed.

According to a fourth aspect, an embodiment of the present disclosure further provides a computer-readable storage medium having stored thereon a computer program that, when run by a processor, causes the steps of the first aspect described above, or the steps of any one of the possible implementations in the first aspect to be performed.

According to the information display method provided in the embodiments of the present disclosure, by using an artificial intelligence (AI) technology, for a target video currently opened by a user, some questions that are associated with the target video and in which the user may be interested may be actively provided, and related artificial intelligence answer results are provided. Thus, the user does not need to think how to describe related question information, or to enter the question information into a search engine to find search results. In this way, more information about the target video may be quickly obtained, thus improving the efficiency of information obtaining.

In order to make the above objectives, features, and advantages of the present disclosure more obvious and comprehensible, a detailed description will be provided below with reference to the preferred embodiments and in conjunction with the accompanying drawings.

### BRIEF DESCRIPTION OF DRAWINGS

In order to more clearly illustrate the technical solutions in the embodiments of the present disclosure, the accompanying drawings for describing the embodiments will be briefly described below. The accompanying drawings herein, which are incorporated into and form a part of the description, show the embodiments in line with the present disclosure and are used in conjunction with the description to illustrate the technical solutions of the present disclosure. It should be understood that the following accompanying drawings only show some embodiments of the present disclosure, and therefore should not be considered as a limitation on the scope. For those of ordinary skill in the art, other related accompanying drawings can be derived from these accompanying drawings without creative efforts.
Fig. 1 is a flowchart of an information display method according to an embodiment of the present disclosure;
Fig. 2 is a schematic diagram of an effect of a video display interface according to an embodiment of the present disclosure;
Fig. 3 is a schematic diagram of an effect of an artificial intelligence dialogue interface according to an embodiment of the present disclosure;
Fig. 4 is a schematic diagram of an effect of another artificial intelligence dialogue interface according to an embodiment of the present disclosure;
Fig. 5 is a schematic diagram of a structure of an information display apparatus according to an embodiment of the present disclosure; and
Fig. 6 is a schematic diagram of a computer device according to an embodiment of the present disclosure.

### DETAILED DESCRIPTION

In order to make the objectives, technical solutions, and advantages of embodiments of the present disclosure clearer, the technical solutions in the embodiments of the present disclosure will be clearly and completely described below with reference to the accompanying drawings in the embodiments of the present disclosure. Apparently, the described embodiments are merely some rather than all of the embodiments of the present disclosure. In general, the components of the embodiments of the present disclosure described and shown in the accompanying drawings herein can be arranged and designed in various configurations. Therefore, the following detailed description of the embodiments of the present disclosure, which are set forth in the accompanying drawings, is not intended to limit the scope of protection of the present disclosure, but merely represents selected embodiments of the present disclosure. All other embodiments obtained by those skilled in the art based on the embodiments of the present disclosure without creative efforts shall fall within the scope of protection of the present disclosure.

According to research, if a user wants to learn more information about a current video while browsing the video, the user usually performs a search using a search engine. During the search, the user needs to think how to describe a related question, edit a question related to the current video, and then enter the question in the search engine and trigger a search to find more information about the current video. The above method for obtaining information results in cumbersome operations and low information obtaining efficiency.

Based on this, an embodiment of the present disclosure provides an information display method. The method includes: displaying a target video and artificial intelligence question-answering prompt information; displaying an artificial intelligence dialogue interface in response to a trigger operation for the artificial intelligence question-answering prompt information; and displaying, on the artificial intelligence dialogue interface, generated first question information associated with the target video and a generated first artificial intelligence answer result corresponding to the first question information.

In this embodiment of the present disclosure, the artificial intelligence question-answering prompt information is displayed on a display interface of the target video. As such, in the process of displaying the target video, the question-answering prompt information can be displayed synchronously to prompt a user to choose whether to trigger it to obtain more information about the target video; and after the user triggers the question-answering prompt information, the artificial intelligence dialogue interface may be entered, and the first question information associated with the target video and the first artificial intelligence answer result are displayed on the artificial intelligence dialogue interface, where the first question information and the first answer result displayed on the artificial intelligence dialogue interface are actively generated through a question-answering model. Through the above process, the user does not need to think how to describe related question information, or to enter the question information into a search engine to find search results. In this way, more information about the target video can be quickly obtained, thus improving the efficiency of obtaining information about a video.

The disadvantages existing in the above solutions and the proposed solutions have been obtained by the inventors through practice and careful research. Therefore, the discovery process of the above problems and the solutions proposed by the present disclosure below for the above problems should all be contributions made by the inventors to the present disclosure during the process for the present disclosure.

It should be noted that similar reference signs and letters refer to similar items in the following accompanying drawings. Therefore, once a specific item is defined in one of the accompanying drawings, it need not be further defined and explained in subsequent accompanying drawings.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

To facilitate an understanding of the embodiments, an information display method disclosed in an embodiment of the present disclosure is first described in detail. An execution body of the information display method provided in the embodiment of the present disclosure is generally a computer device with some computing capabilities.

The information display method provided in the embodiment of the present disclosure is described below by using an example in which the execution body is a terminal device.

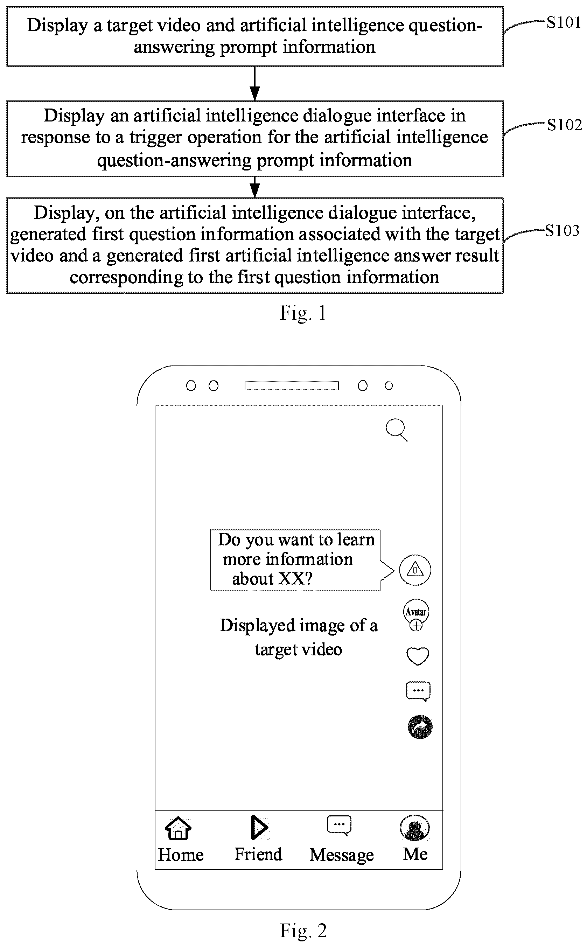

Fig. 1 is a flowchart of an information display method according to an embodiment of the present disclosure. The method includes S101 to S103.

S101: Display a target video and artificial intelligence question-answering prompt information.

After a user opens a video display interface, the target video and the artificial intelligence question-answering prompt information may be displayed on the video display interface. Herein, the video display interface may be a video stream pushing interface, a search result interface, or a video playback interface. When the video display interface is a video stream pushing interface, the target video may be a recommended video displayed on the video stream pushing interface, i.e., a video in a video stream. When the video display interface is a search result interface, the target video may be a search video displayed in a search result list, i.e., a video in search results displayed after the user performs a search. When the video display interface is a video playback interface, the target video is a video currently being played.

During implementation, the artificial intelligence question-answering prompt information may be preset prompt information. In this case, generated question-answering prompt information is generic question-answering prompt information, that is, question-answering prompt information generated for different videos may be the same, for example, "Do you want to learn more information?", and for another example, "Ask a question!".

Further, the generated question-answering prompt information may be generated for the target video, that is, the generated question-answering prompt information is specific, and question-answering prompt information generated for different videos may be different. In this case, the above-mentioned question-answering prompt information may be generated based on a preset prompt information template and a target object extracted from description information of the target video or recognized from a video frame image. For example, the prompt information template is "Do you want to learn more information about XX?", and the target object "XX" is extracted from the target video, and complete prompt information can then be formed by combining the prompt information template and the extracted target object "XX". In addition to the template-based generation method, the prompt information herein may alternatively be generated in an intelligent manner by using a trained question-answering model.

By displaying question information associated with the target video, the user may be directed to trigger the question information and obtain an answer result corresponding to the question information, where a target object may include an entity object and/or an event object. For example, the target video is a video about a lunar eclipse, and the generated question-answering prompt information may be "What is a lunar eclipse?", "How is a lunar eclipse formed?", or the like. In an implementation, the question-answering prompt information may be prompt information for directing the user to ask questions about the target object associated with the target video. For example, the target video is a video about a lunar eclipse, and the generated question-answering prompt information may be "Ask more questions about a lunar eclipse!" or the like.

The artificial intelligence question-answering prompt information may be displayed during the display of the target video. In an implementation, the artificial intelligence question-answering prompt information may be displayed at a target position on the video display interface during the display of the target video. In order to not affect a display effect of the target video, for example, the artificial intelligence question-answering prompt information may be displayed at an edge of the video display interface.

In order to prompt the user, in an implementation, an artificial intelligence question-answering identifier may further be displayed on the video display interface. The artificial intelligence question-answering identifier may be used for indicating that information displayed at a position corresponding to the artificial intelligence question-answering identifier is the artificial intelligence question-answering prompt information. In a manner, the artificial intelligence question-answering identifier may correspond to at least two display states. One display state may be used for indicating that the question-answering model currently has not generated the artificial intelligence question-answering prompt information yet; and the other display state may be used for indicating that the question-answering model currently has generated the artificial intelligence question-answering prompt information. For example, if the artificial intelligence question-answering prompt information currently has not been generated yet, the artificial intelligence question-answering identifier may be grayed out; and if the artificial intelligence question-answering prompt information currently has been generated, the artificial intelligence question-answering identifier may be highlighted.

For example, the terminal device is a mobile phone. Fig. 2 is a schematic diagram of an effect of a video display interface displayed on a screen of the mobile phone. A target video in a video stream may be displayed on the video display interface, an artificial intelligence question-answering identifier may be displayed at the right edge of the video display interface, and at a position corresponding to the artificial intelligence question-answering identifier, artificial intelligence question-answering prompt information generated based on the target video may be displayed, for example, "Do you want to learn more information about XX?". Herein, "XX" may be a target object associated with the target video.

In order to make the display more intuitive, as shown in Fig. 2, a dialogue bubble may be displayed at the position corresponding to the artificial intelligence question-answering identifier, and the artificial intelligence question-answering prompt information may be displayed in the dialogue bubble. Herein, a language type of the artificial intelligence question-answering prompt information shown in Fig. 2 may not be specifically limited.

S102: Display an artificial intelligence dialogue interface in response to a trigger operation for the artificial intelligence question-answering prompt information.

Herein, in a manner, the artificial intelligence dialogue interface may be entered by triggering the artificial intelligence question-answering prompt information; and in another manner, the artificial intelligence dialogue interface may alternatively be entered by triggering the artificial intelligence question-answering identifier shown in Fig. 2. The artificial intelligence dialogue interface may be an interface displayed over the target video, or an interface switched from the video display interface.

The manner in which the artificial intelligence dialogue interface is displayed may not be specifically limited. For example, the artificial intelligence dialogue interface may appear from the bottom or from the side where the artificial intelligence question-answering identifier is displayed.

S103: Display, on the artificial intelligence dialogue interface, generated first question information associated with the target video and a generated first artificial intelligence answer result corresponding to the first question information.

Herein, the first question information associated with the target video may be generated for the target video by using the above-mentioned trained question-answering model. In an implementation, the first question information may be generated by the following steps:
Step 1: Perform object recognition on description information and/or a video picture of the target video, so as to determine a target object associated with the target video.
Step 2: Generate the first question information based on introduction information and/or search data associated with the target object.

In step 1, the description information of the target video may be text description information that can summarize the target video, for example, the description information may include title information, tag information, etc., of the target video.

The video picture may be a frame image in the target video. Herein, the object recognition may be performed on the description information and/or video picture of the target video by using any feasible object recognition method, which is not specifically limited herein.

The target object associated with the target video may be an entity object contained in the target video, for example, the target video is an interview video about an actor, and the determined target object may be the actor. The target object may also be an entity object related to the target video and not contained in the target video, for example, the target video is a video about the creation of a painting, and the determined target object may be a painter of the painting.

The target object associated with the target video may also be an event associated with a person contained in the target video, for example, the target video is a video about a game of a basketball player, and the determined target object may be a game event.

In step 2, the introduction information associated with the target object may include encyclopedic knowledge of the entity object or event details of the event object. The search data associated with the target object may include historical search information associated with the target object and entered by a user after browsing the target video, or may include search results associated with the target object and determined based on the historical search information, where the search results associated with the target object may include media content, such as encyclopedic knowledge of the target object, videos containing the target object, and pictures containing the target object.

In a manner, with regard to the introduction information associated with the target object, question information for directing the user to obtain the introduction information may be generated. For example, if the determined target object is an actor, and the introduction information associated with the target object may include the actor's performance experience, the first question information "Do you want to know about the actor's performance experience?" may be generated.

In a manner, with regard to the historical search information associated with the target object, the historical search information may be used as the first question information. For example, if the target video is a video about a lunar eclipse, the determined target object is the lunar eclipse, and the user has performed a search using the search information "How is a lunar eclipse formed?" after browsing the video about the lunar eclipse, the historical search information may be used as the first question information.

In a manner, with regard to the search results associated with the target object, question information for directing the user to obtain the search results may be generated. For example, if the target video is a clip of a movie in which an actor participates, the determined target object is the actor, and the user has searched for encyclopedic knowledge of a leading actress in the movie after browsing the clip of the movie, the first question information "Do you want to know more encyclopedic knowledge about the leading actress?" may be generated based on the encyclopedic knowledge (search results obtained after the search) of the leading actress.

After the target object associated with the target video is determined, the first question information may be generated according to at least one of the above-mentioned manners in step 2. Herein, a plurality of pieces of first question information may be generated. When a relatively large number of pieces of first question information are generated, some pieces of first question information may be selected from the generated first question information to be displayed on the artificial intelligence dialogue interface.

Specifically, in an implementation, in response to the total number of pieces of generated first question information exceeding a set threshold, based on behavior data obtained with the user authorization, first question information to be displayed on the artificial intelligence dialogue interface is determined from the plurality of pieces of generated first question information.

Herein, the behavior data obtained with the user authorization may include interactive behavior data, personalized setting data, etc., obtained with the user authorization, where the personalized setting data may include, for example, interest topics that are set, interest fields that are set, etc. Herein, for the manner in which the behavior data is obtained and used, reference may be made to the descriptions in the specific implementations of the present disclosure.

Based on the behavior data obtained with the user authorization, the usage intensity of each piece of first question information used by the user during historical searches may be determined (the usage intensity may reflect information, such as usage frequency of the user), and the first question information to be displayed on the artificial intelligence dialogue interface may then be determined from the plurality of pieces of generated first question information based on the usage intensity of each piece of first question information.

The first question information, which is determined by the above-mentioned implementations and may be displayed on the artificial intelligence dialogue interface, is more likely triggered by the user, and thus more valuable information in which the user may be interested may be displayed to the user, thereby meeting potential search requirements of the user, and improving the efficiency of obtaining effective information.

In this embodiment of the present disclosure, the first artificial intelligence answer result corresponding to the first question information may alternatively be generated by the trained question-answering model. The first artificial intelligence answer result may include media content in different forms, such as text, pictures, videos, and audio.

During the display of the artificial intelligence dialogue interface, in an implementation, the first artificial intelligence answer result corresponding to the first question information may be displayed while displaying the first question information.

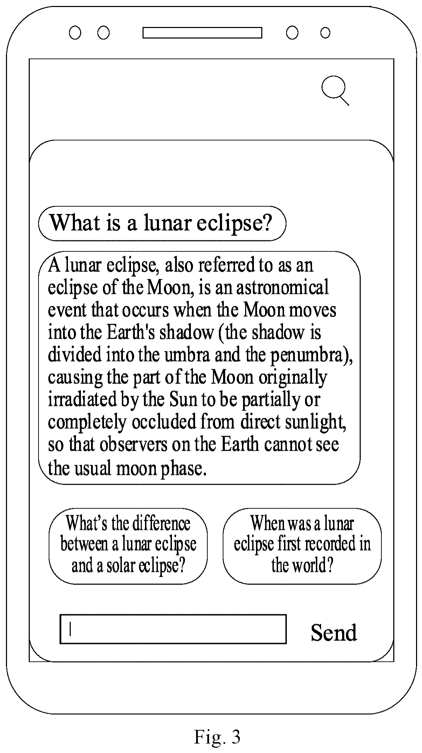

For example, the terminal device is a mobile phone. Fig. 3 is a schematic diagram of an effect of an artificial intelligence dialogue interface displayed on a screen of the mobile phone. The artificial intelligence dialogue interface shown in Fig. 3 may be an interface entered after a user triggers question-answering prompt information during the display of a video about a lunar eclipse. In Fig. 3, first question information "What is a lunar eclipse?", and a corresponding first artificial intelligence answer result below the first question information may be displayed.

The displayed first question information and first artificial intelligence answer result corresponding to the first question information may be displayed in an answer-its-own-question form, i.e., the first question information and the first artificial intelligence answer result corresponding to the first question information may be displayed in the tone of the question-answering model. After providing the first question information, the question-answering model may automatically answer the first question information, i.e., the first artificial intelligence answer result is displayed. In order to realize intuitive display, the first question information and the first artificial intelligence answer result corresponding to the first question information may be displayed in the form of dialogue bubbles.

In the foregoing implementation, the user may directly browse the first question information and the first artificial intelligence answer result corresponding to the first question information, thereby improving the efficiency for the user to obtain information.

In an implementation, the first artificial intelligence answer result corresponding to the first question information may alternatively be displayed after the first question information is triggered.

In a specific implementation, a plurality of pieces of generated first question information associated with the target video may be displayed on the artificial intelligence dialogue interface. In response to a trigger operation for any of the plurality of pieces of first question information, a first artificial intelligence answer result corresponding to the any piece of first question information is displayed on the artificial intelligence dialogue interface.

In the foregoing implementation, the plurality of pieces of first question information may be displayed at a first display position on the artificial intelligence dialogue interface. After any piece of first question information is triggered, the any piece of first question information and a first artificial intelligence answer result corresponding to the any piece of first question information may be displayed at a second display position on the artificial intelligence dialogue interface.

For example, the plurality of pieces of first question information may be displayed at the bottom of the artificial intelligence dialogue interface, and after any piece of first question information is triggered, the any piece of first question information and a first artificial intelligence answer result corresponding to the any piece of first question information may be displayed at a position above the plurality of pieces of first question information on the artificial intelligence dialogue interface, that is, the second display position is above the first display position. In another implementation, the first display position and the second display position may also be set in another manner, for example, the first display position is located above the second display position, which may not be specifically limited herein.

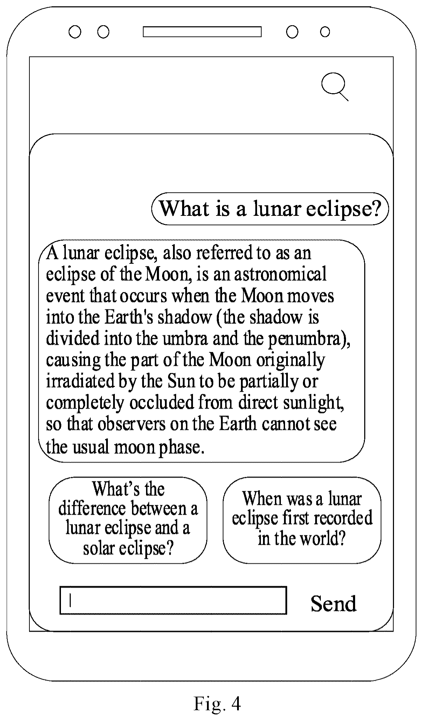

Taking the terminal device being a mobile phone as an example, Fig. 4 is a schematic diagram of an effect of another artificial intelligence dialogue interface displayed on a screen of the mobile phone. The artificial intelligence dialogue interface shown in Fig. 4 may also be an interface entered after a user triggers question-answering prompt information during the display of a video about a lunar eclipse. In Fig. 4, a plurality of pieces of first question information may be displayed at the bottom of the artificial intelligence dialogue interface, and triggered first question information "What is a lunar eclipse?", and a first artificial intelligence answer result corresponding to the first question information may be displayed above the plurality of pieces of first question information.

The first question information and the first artificial intelligence answer result corresponding to the first question information may be displayed in the form of a dialogue between the question-answering model and the user, i.e., the first question information and the first artificial intelligence answer result corresponding to the first question information may be displayed in the tone of the question-answering model talking to the user. The user triggers any piece of first question information, which is equivalent to asking the first question information to the question-answering model in the tone of the user, and the first question information is then answered in the tone of the question-answering model, i.e., the first artificial intelligence answer result is displayed. In order to realize intuitive display, the first question information and the first artificial intelligence answer result corresponding to the first question information may be displayed in the form of dialogue bubbles.

In a manner, when any of the plurality of pieces of first question information displayed at the first display position is triggered, the any piece of first question information may continue to be displayed at the first display position.

In a manner, a preset number of pieces of first question information may be displayed at the first display position. When any of the plurality of pieces of first question information displayed at the first display position is triggered, the any piece of first question information may no longer be displayed at the first display position. As shown in Fig. 3 or Fig. 4, after any piece of first question information is triggered, the first question information is no longer displayed at the bottom. In addition, in a manner, new first question information may also be displayed at the first display position, where the new first question information may be generated according to the foregoing steps for generating first question information, and details are not repeated herein.

As described above, artificial intelligence question-answering prompt information may be question information related to a target object associated with a target video, that is, the artificial intelligence question-answering prompt information may include at least one piece of first question information. Therefore, in an implementation, the step of displaying an artificial intelligence dialogue interface in response to a trigger operation for the artificial intelligence question-answering prompt information may specifically include: in response to a trigger operation for any of the at least one piece of first question information, displaying, on the artificial intelligence dialogue interface, the any piece of first question information and a first artificial intelligence answer result corresponding to the any piece of first question information.

Herein, the at least one piece of first question information is displayed through the artificial intelligence question-answering prompt information, such that the user can trigger any piece of first question information selected from a plurality of displayed questions, and the any piece of first question information and a first artificial intelligence answer result corresponding to the any piece of first question information are then displayed on the artificial intelligence dialogue interface.

After the any piece of first question information is triggered, in a manner, the any piece of first question information and the first artificial intelligence answer result corresponding to the any piece of first question information may be displayed in an answerits-own-question form, as shown in Fig. 3, which is the schematic diagram of the effect of the artificial intelligence dialogue interface. In a manner, the any piece of first question information and the first artificial intelligence answer result corresponding to the any piece of first question information may be displayed in the form of a dialogue between a robot and the user, as shown in Fig. 4, which is the schematic diagram of the effect of the artificial intelligence dialogue interface. The specific display manner is not repeated herein.

In this embodiment of the present disclosure, in addition to target first question information, the artificial intelligence question-answering prompt information may further include a partial first artificial intelligence answer result corresponding to the target first question information.

Herein, the target first question information may be at least one piece of first question information among pieces of first question information. That is, the artificial intelligence question-answering prompt information may include the target first question information and a partial first artificial intelligence answer result corresponding to the target first question information. In this case, in an implementation, the step of displaying an artificial intelligence dialogue interface in response to a trigger operation for the artificial intelligence question-answering prompt information may specifically include: in response to a trigger operation for the target first question information or the partial first artificial intelligence answer result, displaying a complete first artificial intelligence answer result corresponding to the target first question information.

Herein, by making the artificial intelligence question-answering prompt information include the target first question information and the partial first artificial intelligence answer result corresponding to the target first question information, a user may have, after browsing the partial first artificial intelligence answer result, a desire to obtain a complete first artificial intelligence answer result, such that the user may be prompted to trigger the target first question information or the partial first artificial intelligence answer result, thereby obtaining the complete first artificial intelligence answer result.

Herein, in order to show a correspondence between the target first question information and the complete first artificial intelligence answer result, in an implementation, after the target first question information or the partial first artificial intelligence answer result is triggered, in addition to the complete first artificial intelligence answer result corresponding to the target first question information, the target first question information may be further displayed. The target first question information and the corresponding complete first artificial intelligence answer result may be displayed in a display manner shown on the artificial intelligence dialogue interface in Fig. 3 or Fig. 4. The specific display manner is not repeated herein.

In addition to the first artificial intelligence answer result corresponding to the first question information that is generated by a question-answering model, the user may also have a desire to obtain a second artificial intelligence answer result related to the first artificial intelligence answer result. Based on this, in an implementation, after the generated first question information associated with a target video and the generated first artificial intelligence answer result corresponding to the first question information are displayed, at least one piece of generated second question information corresponding to the first artificial intelligence answer result may be further displayed. In response to a trigger operation for any piece of second question information, a second artificial intelligence answer result corresponding to the second question information is displayed.

Herein, the second question information may be question information generated by the question-answering model based on the first question information and related to the first artificial intelligence answer result. For example, the first question information may be "How many planets are there in the solar system?", and the first artificial intelligence answer information displayed may be "There are seven planets in the solar system, arranged in order of distances from the Sun, and the seven planets are Neptune, Uranus, Saturn, Jupiter, Mars, Earth, Venus, and Mercury"; and the second question information may be "How far is Neptune from Earth?".

The second question information may be displayed after the user triggers the first question information and the first artificial intelligence answer result corresponding to the first question information is displayed. The question-answering model may generate the second question information based on the first artificial intelligence answer result corresponding to the first question information triggered by the user. The generated second question information may be displayed at a preset position on the artificial intelligence dialogue interface. When the user continues to trigger any piece of second question information, a second artificial intelligence answer result corresponding to the second question information may be further displayed, and the question-answering model may continue to generate new question information based on the second artificial intelligence result and/or the first artificial intelligence answer result, until the user closes the artificial intelligence dialogue interface.

In addition to the first artificial intelligence answer result corresponding to the first question information that is generated by the question-answering model, the user may also want to obtain a third artificial intelligence answer result corresponding to personalized third question information. Based on this, in a possible implementation, after the generated first question information associated with the target video and the first generated artificial intelligence answer result corresponding to the first question information are displayed, personalized third question information entered by the user may be further received, and a third artificial intelligence answer result corresponding to the third question information may be displayed.

Herein, a question input box is displayed at a target position on the artificial intelligence dialogue interface, for example, at the bottom of the artificial intelligence dialogue interface as shown in Fig. 3 or Fig. 4, the user may enter a personalized question into the question input box, and after a search operation is performed, the personalized third question information and the third artificial intelligence answer result corresponding to the third question information may be displayed above the question input box.

Those skilled in the art can understand that, in the above methods of the specific implementations, the order in which the steps are written does not imply a strict execution order, and does not constitute any limitation on the implementation process. The specific execution order of the steps should be determined by their functions and possible internal logics.

Based on the same inventive concept, an information display apparatus corresponding to the information display method is further provided in an embodiment of the present disclosure. Because the principle of solving the problems by the apparatus in the embodiment of the present disclosure is similar to that of the information display method described above in the embodiments of the present disclosure, for the implementation of the apparatus, reference may be made to the implementations of the method, and the repetitions are not described herein again.

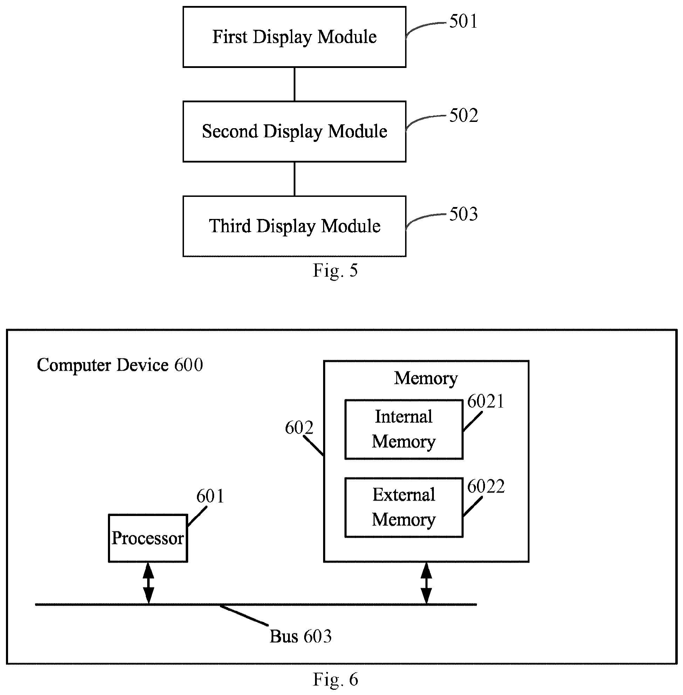

Fig. 5 is a schematic diagram of a structure of an information display apparatus according to an embodiment of the present disclosure. The apparatus includes:
a first display module 501 configured to display a target video and artificial intelligence question-answering prompt information;
a second display module 502 configured to display an artificial intelligence dialogue interface in response to a trigger operation for the artificial intelligence question-answering prompt information; and
a third display module 503 configured to display, on the artificial intelligence dialogue interface, generated first question information associated with the target video and a generated first artificial intelligence answer result corresponding to the first question information.

In a possible implementation, the first question information is generated according to the following steps:
performing object recognition on description information and/or a video picture of the target video, so as to determine a target object associated with the target video, where the target object includes an entity object and/or an event object; and
generating the first question information based on introduction information and/or search data associated with the target object.

In a possible implementation, after the generating the first question information based on introduction information and/or search data associated with the target object, the following is further included:
in response to a total number of pieces of generated first question information exceeding a set threshold, based on behavior data obtained with user authorization, determining, from a plurality of pieces of generated first question information, first question information to be displayed on the artificial intelligence dialogue interface.

In a possible implementation, the third display module 503 is specifically configured to:
display, on the artificial intelligence dialogue interface, a plurality of pieces of generated first question information associated with the target video; and
in response to a trigger operation for any of the plurality of pieces of first question information, display, on the artificial intelligence dialogue interface, a first artificial intelligence answer result corresponding to the any piece of first question information.

In a possible implementation, the artificial intelligence question-answering prompt information includes at least one piece of first question information; and
the second display module 502 is specifically configured to:
in response to a trigger operation for any of the at least one piece of first question information, display, on the artificial intelligence dialogue interface, the any piece of first question information and a first artificial intelligence answer result corresponding to the any piece of first question information.

In a possible implementation, the artificial intelligence question-answering prompt information includes target first question information and a partial first artificial intelligence answer result corresponding to the target first question information; and
the second display module 502 is specifically configured to:
in response to a trigger operation for the target first question information or the partial first artificial intelligence answer result, display a complete first artificial intelligence answer result corresponding to the target first question information.

In a possible implementation, after the displaying generated first question information associated with the target video and a generated first artificial intelligence answer result corresponding to the first question information, the apparatus further includes:
a fourth display module configured to display at least one piece of generated second question information corresponding to the first artificial intelligence answer result; and
a fifth display module configured to display, in response to a trigger operation for any of the at least one piece of second question information, a second artificial intelligence answer result corresponding to the second question information.

For the description of the processing processes of various modules in the apparatus, and the interaction processes between the modules, reference may be made to the related description in the above method embodiments, and details are not described herein again.

Based on the same technical concept, an embodiment of the present disclosure further provides a computer device. Fig. 6 is a schematic diagram of a structure of a computer device 600 according to an embodiment of the present disclosure. The computer device includes a processor 601, a memory 602, and a bus 603. The memory 602 is configured to store execution instructions, and includes an internal memory 6021 and an external memory 6022. The internal memory 6021 here is also referred to as a primary memory, which is configured to temporarily store operation data of the processor 601, and data exchanged with the external memory 6022 such as a hard disk. The processor 601 exchanges data with the external memory 6022 through the internal memory 6021. When the computer device 600 is running, the processor 601 communicates with the memory 602 through the bus 603, so that the processor 601 executes the following instructions:
displaying a target video and artificial intelligence question-answering prompt information;
displaying an artificial intelligence dialogue interface in response to a trigger operation for the artificial intelligence question-answering prompt information; and
displaying, on the artificial intelligence dialogue interface, generated first question information associated with the target video and a generated first artificial intelligence answer result corresponding to the first question information.

An embodiment of the present disclosure further provides a computer-readable storage medium having stored thereon a computer program that, when run by a processor, causes the steps of the information display method described in the above method embodiments to be performed. The storage medium may be a volatile or non-volatile computer-readable storage medium.

An embodiment of the present disclosure further provides a computer program product carrying program code, where instructions included in the program code can be used to perform the steps of the information display method described in the above method embodiments. For details, reference may be made to the above method embodiments, and details are not described herein again.

The above computer program product may be implemented in the form of hardware, software or a combination thereof. In an optional embodiment, the computer program product is specifically embodied as a computer storage medium. In another optional embodiment, the computer program product is specifically embodied as a software product, such as a software development kit (SDK).

It can be clearly understood by those skilled in the art that, for convenience and brevity of description, for the specific operation processes of the apparatus described above, reference may be made to the corresponding processes in the foregoing method embodiments, and details are not described herein again. In the several embodiments provided in the present disclosure, it should be understood that the disclosed apparatus and method may be implemented in other manners. The apparatus embodiment described above is merely an example. For example, the unit division is merely logical function division and may be other division during actual implementation. For another example, a plurality of units or components may be combined or integrated into another system, or some features may be omitted or not implemented. In addition, the displayed or discussed mutual couplings, direct couplings, or communication connections may be implemented through some communication interfaces. The indirect couplings or communication connections between the apparatuses or units may be implemented in electrical, mechanical, or other forms.

The units described as separate parts may or may not be physically separate, and parts displayed as units may or may not be physical units, and may be located at one position, or may be distributed on a plurality of network units. Some or all of the units may be selected according to actual needs to achieve the objectives of the solutions of the embodiments.

In addition, various functional units in the various embodiments of the present disclosure may be integrated into one processing unit, each of the units may exist alone physically, or two or more units may be integrated into one unit.

If the functions are implemented in the form of a software functional unit and sold or used as an independent product, the functions may be stored in a non-volatile computer-readable storage medium executable by a processor. Based on such an understanding, the technical solutions of the present disclosure essentially, or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of the present disclosure. Moreover, the foregoing storage medium includes various media such as a USB flash drive, a removable hard disk, a read-only memory (ROM), a random access memory (RAM), a magnetic disk, or an optical disc that can store program code.

It should be finally noted that the embodiments described above are merely specific implementations of the present disclosure, and are used for illustrating rather than limiting the technical solutions of the present disclosure, and the scope of protection of the present disclosure is not limited thereto. Although the present disclosure has been described in detail with reference to the foregoing embodiments, those of ordinary skill in the art should understand that, within the technical scope disclosed in the present disclosure, any person skilled in the art could still modify the technical solutions specified in the foregoing embodiments, or readily figure out any variation thereof, or make equivalent substitution to some of the technical features thereof. However, these modifications, variations, or substitutions do not make the essence of the corresponding technical solutions depart from the spirit and scope of the technical solutions of the embodiments of the present disclosure, and shall fall within the scope of protection of the present disclosure. Therefore, the scope of protection of the present disclosure shall be subject to the scope of protection of the claims.

## Claims

1. An information display method, comprising:
displaying a target video and artificial intelligence question-answering prompt information;
displaying an artificial intelligence dialogue interface in response to a trigger operation for the artificial intelligence question-answering prompt information; and
displaying, on the artificial intelligence dialogue interface, generated first question information associated with the target video and a generated first artificial intelligence answer result corresponding to the first question information.

2. The method according to claim 1, wherein the first question information is generated according to the following steps:
performing object recognition on description information and/or a video picture of the target video, so as to determine a target object associated with the target video, wherein the target object comprises an entity object and/or an event object; and
generating the first question information based on introduction information and/or search data associated with the target object.

3. The method according to claim 2, wherein after the generating the first question information based on introduction information and/or search data associated with the target object, the method further comprises:
in response to a total number of pieces of generated first question information exceeding a set threshold, based on behavior data obtained with user authorization, determining, from a plurality of pieces of generated first question information, first question information to be displayed on the artificial intelligence dialogue interface.

4. The method according to claim 1, wherein the displaying, on the artificial intelligence dialogue interface, generated first question information associated with the target video and a generated first artificial intelligence answer result corresponding to the first question information comprises:
displaying, on the artificial intelligence dialogue interface, a plurality of pieces of generated first question information associated with the target video; and
in response to a trigger operation for any of the plurality of pieces of first question information, displaying, on the artificial intelligence dialogue interface, a first artificial intelligence answer result corresponding to the any piece of first question information.

5. The method according to claim 1 or 2, wherein the artificial intelligence question-answering prompt information comprises at least one piece of first question information; and
the displaying an artificial intelligence dialogue interface in response to a trigger operation for the artificial intelligence question-answering prompt information comprises:
in response to a trigger operation for any of the at least one piece of first question information, displaying, on the artificial intelligence dialogue interface, the any piece of first question information and a first artificial intelligence answer result corresponding to the any piece of first question information.

6. The method according to claim 1 or 2, wherein the artificial intelligence question-answering prompt information comprises target first question information and a partial first artificial intelligence answer result corresponding to the target first question information; and
the displaying an artificial intelligence dialogue interface in response to a trigger operation for the artificial intelligence question-answering prompt information comprises:
in response to a trigger operation for the target first question information or the partial first artificial intelligence answer result, displaying a complete first artificial intelligence answer result corresponding to the target first question information.

7. The method according to claim 1, wherein after the displaying generated first question information associated with the target video and a generated first artificial intelligence answer result corresponding to the first question information, the method further comprises:
displaying at least one piece of generated second question information corresponding to the first artificial intelligence answer result; and
in response to a trigger operation for any of the at least one piece of second question information, displaying a second artificial intelligence answer result corresponding to the second question information.

8. An information display apparatus, comprising:
a first display module, configured to display a target video and artificial intelligence question-answering prompt information;
a second display module, configured to display an artificial intelligence dialogue interface in response to a trigger operation for the artificial intelligence question-answering prompt information; and
a third display module, configured to display, on the artificial intelligence dialogue interface, generated first question information associated with the target video and a generated first artificial intelligence answer result corresponding to the first question information.

9. A computer device, comprising a processor, a memory, and a bus, wherein the memory stores machine-readable instructions executable by the processor, the processor communicates with the memory through the bus when the computer device is running, and the machine-readable instructions, when executed by the processor, cause the information display method according to any one of claims 1 to 7 to be implemented.

10. A computer-readable storage medium, storing a computer program, wherein the computer program, when run by a processor, causes the information display method according to any one of claims 1 to 7 to be performed.
